# EUROPEAN PATENT APPLICATION

(11) **EP 4 151 611 A1**
(43) Date of publication of application: **22.03.2023**
(21) Application number: 21926338.1
(22) Date of filing: 05.11.2021
(51) Int. Cl.: C04B 35/58, C04B 35/622, C04B 38/06

(54) **HIGH-TEMPERATURE-RESISTANT AND OXIDATION-RESISTANT LIGHT-WEIGHT HEAT-INSULATION FOAM MATERIAL AND PREPARATION METHOD THEREFOR**

(30) Priority: 02.11.2021 CN 202111289414
(71) Applicant: Aerospace Research Institute of Materials & Processing Technology, Beijing 100076 (CN)
(72) Inventor: CHEN, Zhiyu, Beijing 100076 (CN); LI, Junning, Beijing 100076 (CN); XU, Yifen, Beijing 100076 (CN); SUN, Chencheng, Beijing 100076 (CN); HU, Jidong, Beijing 100076 (CN); HU, Zijun, Beijing 100076 (CN); FENG, Zhihai, Beijing 100076 (CN)
(74) Representative: Global IP Europe Patentanwaltskanzlei
(86) International application number: PCT/CN2021/128855
(87) International publication number: WO 2022/174624

(57) **Abstract**

A high-temperature-resistant and oxidation-resistant light-weight heat-insulation foam material and a preparation method thereof. The foam material is one of a SiBCN foam material, a SiHfBCN foam material, a SiBCN/C composite foam material and a SiHfBCN/C composite foam material. The foam material is prepared from a precursor solution through processes of template impregnation, curing, drying and cracking; wherein the precursor solution is a SiBCN precursor solution or a SiHfBCN precursor solution, and the template is a polyurethane foam or an organic carbon-modified polyurethane foam. The SiBCN foam material, SiHfBCN foam material, SiBCN/C composite foam material or SiHfBCN/C composite foam material obtained by the present application has the advantages of high temperature resistance, a low thermal conductivity, oxidation resistance, a low density and a high strength.

## Description

### CROSS-REFERENCE TO RELATED APPLICATIONS

This application is a U.S. National-Stage entry under 35 U.S.C. § 371 based on International Application No. PCT/CN2021/128855, filed November 05,2021, which was published under PCT Article 21(2) and which claims priority to Chinese Application No. 202111289414.7, filed November 02, 2021, which are all hereby incorporated in their entirety by reference.

### Field of the Application

The present application belongs to the field of high-temperaturethermal insulation materials, particularly relates to a high-temperature-resistant and oxidation-resistant light-weight heat-insulation foam material and a preparation method thereof, and more specifically to a SiBCN foam material, a SiHfBCN foam material, a SiBCN/C composite foam material, or a SiHfBCN/C composite foam material and preparation method thereof.

### Background of the Application

Foam materials with high porosity, low density, and low thermal conductivity are common thermal insulation materials, such as polyurethane foam, alumina foam, silicon carbide foam, carbon foam, etc. Among the above-mentioned foams, the lightweight carbon foam with three-dimensional mesh structure has broad application prospects in the field of heat (thermal) insulation because of its low density, low thermal conductivity, low thermal expansion coefficient, and good high temperature stability. However, although carbon foam can be used at temperatures up to 2000°C in an inert environment, it is easily oxidized in an aerobic environment, and it can be used in air for a long time at only 350°C and has low mechanical strength, which leads to its application being limited. Therefore, the development of a light-weight heat-insulation foam material with high temperature resistance and oxidation resistance functions has important application value.

### SUMMARY

In view of the shortcomings and defects existing in the prior art, the present application aims to provide a high-temperature-resistantand oxidation-resistant light-weight heat-insulation foam material and a preparation method thereof. The SiBCN foam material, SiHfBCN foam material, SiBCN/C composite foam material or SiHfBCN/C composite foam material obtained by the present application has the advantages of high temperature resistance, a low thermal conductivity, oxidation resistance, a low density, and a high strength.

In order to achieve the above-mentioned purpose, the first aspect of the present application provides a high-temperature-resistant and oxidation-resistant light-weight heat-insulation foam material, using the following technical solutions: A high-temperature-resistant and oxidation-resistant light-weight heat-insulation foam material,being one selected from the group consisting of a SiBCN foam material, a SiHfBCN foam material, a SiBCN/C composite foam material and a SiHfBCN/C composite foam material, and prepared from a precursor solution through processes of template impregnation, curing, drying and cracking;
wherein,the precursor solution is a SiBCN precursor solution or a SiHfBCN precursor solution, the template is a polyurethane foam or an organic carbon-modified polyurethane foam, a SiBCN precursor for preparing the SiBCN precursor solution is polyborosilazane, a SiHfBCN precursor for preparing the SiHfBCN precursor solution is hafnium-containing polyborosilazane.

The SiBCN/C composite foam material is a composite foam material formed by attaching SiBCN materials to the surface of C layer; The SiHfBCN/C composite foam material is a composite foam material formed by attaching SiHfBCN materials to the surface of C layer.

In the present application, the SiBCN foam material or the SiHfBCN foam materialis obtained by performing processes of impregnation, curing, drying, and cracking sequentially using the polyurethane foam as the template and the SiBCN precursor solution or the SiHfBCN precursor solution as the impregnation solution, wherein the polyurethane foam is chosen as the template for the main purpose that the polyurethane foam has a unique pore structure, its raw materials are easy available at low cost and in the cracking process, the polyurethane foam will be ablated without residue, so as to obtain the SiBCN foam material or the SiHfBCN foam material with porous structure. The main purpose of choosing the SiBCN precursor solution as the impregnation solution is that during the curing process and cracking process (i.e., ceramic transformation process) of the SiBCN precursor, free carbon will combined with BN to form BNCₓ structure, which can greatly reduce the reaction activity of the free carbon and the diffusion rate of atoms in the system, thus preventing the carbon thermal reduction reaction between the free carbon and Si₃N₄ in SiBCN foam material, at the same time, the special SiOₓN₄₋ₓ structure in the foam material will also prevent the diffusion of oxygen atoms, making SiBCN foam material with good high-temperature resistance and oxidation resistance. The main purpose of selecting the SiHfBCN precursor solution as the impregnating solution is that the high temperature element Hf in the SiHfBCN precursor can further improve the high-temperature resistance of the foam material, and the SiₓO_{y}Hf_{z}structure formed after oxidation can prevent the diffusion of oxygen atoms, thus making the SiHfBCN ceramic foam also have good antioxidant properties.

In the present application, the SiBCN foam material or the SiHfBCN foam material is obtained by performing processes of impregnation, curing, drying and cracking sequentially using the organic carbon-modified polyurethane foam as the template and the SiBCN precursor solution or the SiHfBCN precursor solution as the impregnation solution, wherein the main purpose of selecting the organic carbon-modified polyurethane foam as the template is to modify polyurethane foam by using organic carbon source, so as to obtain polyurethane foam material with carbon skeleton. Then, in the subsequent cracking process, the polyurethane foam material will be ablated without residue, thus enabling the carbon skeleton to be compounded with the SiBCN foam material to obtain a SiBCN/C multilayer skeleton foam material, or with the SiHfBCN foam material to obtain a SiHfBCN/C multilayer skeleton foam material. Carbon has a higher temperature resistance grade, and the foam material with the C-layer has a higher temperature resistance performance, and a higher strength retention under high temperature condition.

In the above-mentioned high-temperature-resistant and oxidation-resistant light-weight heat-insulation foam material, as one preferred embodiment, the SiBCN foam material has a density of equal to and greater than 0.07 g/cm³, a room temperature compressive strength of equal to and greater than 0.3 MPa, and a room temperature thermal conductivity of equal to and greater than 0.046 W/(m▪K);
the SiHfBCN foam material has a density of equal to and greater than 0.11 g/cm³, a room temperature compressive strength of equal to and greater than 0.45 MPa, and a room temperature thermal conductivity of equal to and greater than 0.053 W/(m▪K);
the SiBCN/C composite foam material has a density of equal to and greater than 0.09 g/cm³, a room temperature compressive strength of equal to and greater than 0.38 MPa, and a room temperature thermal conductivity of equal to and greater than 0.052 W/(m▪K);
the SiHfBCN/C composite foam material has a density of equal to and greater than 0.13 g/cm³, a room temperature compressive strength of equal to and greater than 0.68 MPa, and a room temperature thermal conductivity of equal to and greater than 0.062 W/(m▪K);
preferably, the SiBCN foam material has a density of 0.17~0.6 g/cm³(such as 0.25 g/cm³, 0.32 g/cm³, 0.45 g/cm³, 0.50 g/cm³, and 0.58 g/cm³), a room temperature compressive strength of 0.8~7.2 MPa (such as 1.2 MPa, 3.5 MPa, 4.8 MPa, 5.6 MPa, and 6.8 MPa), and a room temperature thermal conductivity of 0.06~0.18 W/(m▪K) (such as 0.08 W/(mK), 0.10 W/(mK), 0.12 W/(mK), and 0.15 W/(mK));
the SiHfBCN foam material has a density of0.21~0.78 g/cm³ (such as 0.25 g/cm³, 0.32 g/cm³, 0.45 g/cm³, 0.50 g/cm³, and 0.68 g/cm³), a room temperature compressive strength of 1.1~7.6 MPa (such as 1.5 MPa, 3.5 MPa, 4.8 MPa, 5.6 MPa, and 6.8 MPa), and a room temperature thermal conductivity of 0.067~0.22 W/(m▪K) (such as 0.08 W/(mK), 0.10 W/(mK), 0.15 W/(mK), and 0.18 W/(mK));
the SiBCN/C composite foam material has a density of0.23~0.68 g/cm³(such as 0.25 g/cm³, 0.32 g/cm³, 0. 45 g/cm³, 0.50 g/cm³, and 0.58 g/cm³), a room temperature compressive strength of 1.0~7.4 MPa (such as 1.2 MPa, 3.5 MPa, 4.8 MPa, 5.6 MPa, and 6.8 MPa), and a room temperature thermal conductivity of 0.067~0.19 W/(m▪K) (such as 0.08 W/(mK), 0.10 W/(mK), 0.15 W/(mK), and 0.18 W/(mK));
the SiHfBCN/C composite foam has a density of0.26~0.82 g/cm³(such as 0.28 g/cm³, 0.32 g/cm³, 0.45 g/cm³, 0.62 g/cm³, and 0.78 g/cm³), a room temperature compressive strength of 1.5~8.63 MPa (such as 1.8 MPa, 3.5 MPa, 5.6 MPa, 6.8 MPa, and 8.0 MPa), and a room temperature thermal conductivity of 0.074~0.25 W/(m▪K) (such as 0.08 W/(mK), 0.15 W/(mK), 0.18 W/(mK), 0.20 W/(mK), and 0.22 W/(mK)).

The second aspect of the present application provides a preparation method of the high-temperature-resistant and oxidation-resistant light-weight heat-insulation foam material, comprising the following steps:
adopting a polyurethane foam or an organic carbon-modified polyurethane foam as a template and a SiBCN precursor solution or a SiHfBCN precursor solution as an impregnation solution, and sequentially carrying out impregnation process, curing process, drying process and cracking process to obtain the foam material;
wherein, the SiBCN precursor solution or the SiHfBCN precursor solution is obtained by dissolving a SiBCN precursor or a SiHfBCN precursor in an organic solvent, adding a catalyst and mixing uniformly; the SiBCN precursor is polyborosilazane and the SiHfBCN precursor is hafnium-containing polyborosilazane.

The impregnation process in the present application means that the template is completely impregnated into the impregnating solution for adsorption, and the impregnation process completed when the template is saturated with adsorption. The different structure of the template has an effect on the microstructure, density, strength, and thermal conductivity of the resulting foam material.

In the above-mentioned preparation method, as one preferred embodiment, a mass fraction of the SiBCN precursor in the SiBCN precursor solution or a mass fraction of the SiHfBCN precursor in the SiHfBCN precursor solution is 5%~80% (such as 7%, 25%, 38%, 46%, 57%, 68%, and 75%), and a mass of the catalyst is 0.5%~5% (such as 0.8%, 1.5%, 2.5%, 3.5%, and 4.5%) of a mass of the SiBCN precursor or the SiHfBCN precursor;
preferably, the mass fraction of the SiBCN precursor in the SiBCN precursor solution or the mass fraction of the SiHfBCN precursor in the SiHfBCN precursor solution is 10%~30% (such as 12%, 15%, 18%, 22%, and 25%).

In the present application, the mass fraction of the SiBCN precursor solution or the SiHfBCN precursor solution affects the microstructure, density, strength, and thermal conductivity of the resulting foam material. The larger the mass fraction of the SiBCN precursor solution or the SiHfBCN precursor solution, the higher density, higher strength and higher thermal conductivity of the resulting foam material. The aim of adding the catalyst to the SiBCN precursor solution or the SiHfBCN precursor solution is to catalyze the curing reaction in the curing process. If the concentration of the added catalyst is too high, the reaction rate will be too high, which is not conducive to the formation of a uniform porous structure of the foam material; if the concentration of the added catalyst is too low, the reaction rate will be too slow.

In the above-mentioned preparation method, as one preferred embodiment, the organic solvent is liquid alkane;
preferably, the organic solvent is selected from at least one of the group consisting of hexane, heptane, octane, nonane, decane, undecane, dodecane, tridecane and their isomers;
more preferably, the organic solvent is selected from at least one of the group consisting of n-hexane, n-octane and n-nonane.

In the present application, the main purpose of choosing the above-mentioned organic solvent (s) is (are) that such solvents can dissolve the SiBCN precursors or the SiHfBCN precursors, at the same time, such solvent does not dissolve polyurethane foam materials and can be compatible with polyurethane foam materials; moreover, the above-mentioned organic solvents are non-toxic or low toxicity, and will not cause harm to human health when used.

In the above-mentioned preparation method, as one preferred embodiment, the catalyst is at least one of the group consisting of diisopropylbenzene peroxide (dicumyl peroxide), dibenzoyl peroxide, azodiisobutyronitrile, azodiisoheptanitrile and divinylbenzene;
preferably, the catalyst is at least one of the group consisting of diisopropylbenzene peroxide and divinylbenzene.

In the above-mentioned preparation method, as one preferred embodiment, the organic carbon-modified polyurethane foam is prepared by immersing the polyurethane foam in an organic carbon source and then curing the organic carbon source attached to the polyurethane foam;
preferably, the organic carbon source is selected from one of the group consisting of furfuryl alcohol, phenolic resin and resorcinol-formaldehyde sol;
more preferably, in a process for preparing the organic carbon-modified polyurethane foam, the curing is to raise a temperature from room temperature to 50~200°C(such as 80°C, 100°C, 120°C and 140°C) at a heating rate of 0.01~10°C/min(such as 0.05°C/min, 0.5°C/min, 1°C/min, 5°C/min and 8°C/min) in an inert gas environment of nitrogen or argon, and then keep the temperature for 2~96 hours(such as 5h, 20h, 45h, 62h and 85h) to cross-link and solidify the organic carbon source, so as to obtain the organic carbon-modified polyurethane foam.

In the above-mentioned preparation method, as one preferred embodiment, when the organic carbon source is furfuryl alcohol, the process for preparing the organic carbon-modified polyurethane foam further includes adding formic acid or methyl p-toluenesulfonate as a catalyst into the furfuryl alcohol;
preferably, when the catalyst is formic acid (which is an analytical reagent), a concentration of formic acid, namely, the ratio of a mass of formic acid to a volume of furfuryl alcohol, is 40~65g/L (such as 45 g/L, 48g/L, 52g/L, 58g/L and 62g/L);
preferably, when the catalyst is methyl p-toluenesulfonate, a mass ratio of the methyl p-toluenesulfonate to the furfuryl alcohol is (0.004~0.08): 1 (such as 0.008:1, 0.01:1, 0.03:1, 0.05:1and 0.078:1).

When the organic carbon source is a phenolic resin, the process for preparing the organic carbon-modified polyurethane foam further includes adding hexamethylenetetramine as a catalyst and anhydrous ethanol as a solvent into the phenolic resin;
preferably, a mass ratio of the hexamethylenetetramine to the phenolic resin is 1:(4~9) (such as 1:5, 1:6, 1:7 and 1:8);
preferably, the concentration of the phenolic resin, namely, a ratio of a mass of the phenolic resin to a volume of anhydrous ethanol, is 0.1~0.2 g/mL (such as 0.12 g/mL, 0.14 g/mL, 0.16 g/mL and 0.18 g/mL).

When the organic carbon source is resorcinol-formaldehyde sol, the process for preparing the organic carbon-modified polyurethane foam further includes adding at least one selected from the group consisting of sodium carbonate, sodium hydroxide, and barium hydroxide as a catalyst and deionized water as a solvent into the resorcinol-formaldehyde sol;
preferably, a molar ratio of the resorcinol to the formaldehyde is 1:2;
preferably, a molar ratio of the resorcinol to the catalyst is (50 ~1000):1 (such as 100:1, 300:1, 500:1, 700:1 and 900: 1); and a molar ratio of the resorcinol to the deionized water is (0.01 ~ 0.5):1 (such as 0.05:1, 0.20:1, 0.35:1 and 0.45:1).

In the present application, when the polyurethane foam is immersed in the organic carbon source, the purpose of adding a catalyst simultaneously is to catalyze the curing reaction of the organic carbon source.

In the above-mentioned preparation method, as one preferred embodiment, in the process for preparing the organic carbon-modified polyurethane foam, the used polyurethane foam has a reticulated open-cell structure with an average pore diameter of 1µm~1mm (such as 20µm, 100µm, 300µm, 500µm and 800µm); preferably, the polyurethane foam has a density of 0.025~0.1 g/cm³ (such as 0.030 g/cm³, 0.040g/cm³, 0.050 g/cm³, 0.070 g/cm³and 0.090 g/cm³) and a porosity of more than 92%.

In the present application, when the average pore size of polyurethane foam is too small, it is not conducive to the preparation of blocks and the resulting foam material is easy to crack; when the average pore size of polyurethane foam is too large, the thermal conductivity of the resulting foam material is too large and the strength is low.

In the above-mentioned preparation method, as one preferred embodiment, in the process for preparing the organic carbon-modified polyurethane foam, a vacuum degree of the immersing is 10 Pa~10⁵ Pa (such as 100 Pa, 500 Pa, 10³ Pa and 10⁴ Pa), and an immersing time is 0.1~2h (such as 0.5h, 0.8h, 1.2h and 1.5h).

In the above-mentioned preparation method, as one preferred embodiment,the polyurethane foam used directly as the template has a reticulated open-cell structure with an average pore size of 1µm~1mm (such as 20µm, 100µm, 300µm, 500µm and 800µm); preferably, the polyurethane foam has a density of 0.025~0.1g/cm³(such as 0.030g/cm³, 0.040g/cm³, 0.050g/cm³, 0.070g/cm³ and 0.090g/cm³) and a porosity of more than 92%.

In the above-mentioned preparation method, as one preferred embodiment, in the impregnation process, a vacuum degree is 10 Pa~10⁵ Pa (such as 100 Pa, 500 Pa, 10³ Pa and 10⁴ Pa) and an impregnation time is 1~2h (such as 0.5h, 0.8h, 1.2h and 1.5h).

In the above-mentioned preparation method, as one preferred embodiment, the curing process is to raise a temperature from room temperature to 100~280°C (such as 120°C, 150°C, 220°C and 240°C) at a heating rate of 0.01~5°C/min (such as 0.05°C/min, 0.5°C/min, 1°C/min, 2°C/min and 4°C/min) under a non-oxygen sealing condition (non-oxygen, gas circulation), and to keep the temperature for 2-8 hours.

In the curing process of the present application, if the heating rate is too large, the resulting foam material will be prone to cracking; and if the heating rate is too small, the curing process cycle will be too long and the energy consumption will be high.

In the above-mentioned preparation method, as one preferred embodiment, the drying process is to raise a temperature from room temperature to 100~280°C (such as 120°C, 150 °C, 220°C and 240°C) at a heating rate of 0.01~1°C/min (such as 0.03°C/min, 0.08°C/min, 0.1°C/min, 0.5°C/min and 0.8°C/min) in an inert atmosphere of nitrogen or argon (non-oxygen and gas circulation), and then keep the temperature for 4~24 hours (such as 5h, 10h, 15h, 18hand 22h).

In the present application, the main purpose of performing the drying process is to remove the organic solvent from the system. In the drying process, if the heating rate is too large, the resulting foam material will be prone to cracking, and if the heating rate is too small, the drying process cycle will be too long and the energy consumption will be high.

In the above-mentioned preparation method, as one preferred embodiment, the cracking process is to raise a temperature from room temperature to 800~1500 °C (such as 1000 °C, 1100 °C, 1200°C, 1300 °C and 1400°C) at a heating rate of 0.1~5°C /min (such as 0.3°C/min, 0.5°C/min, 1°C/min, 2°C/min and 4°C/min) in an inert atmosphere of nitrogen or argon (non-oxygen and gas circulation), and then keep the temperature for 2~8 hours (such as 3h, 4h, 5h, 6hand 7h).

In the cracking process of the present application, if the heating rate is too large, the resulting foam material will be prone to cracking; and if the heating rate is too small, the cracking process cycle will be too long and the energy consumption will be high. In the cracking process, if the cracking temperature is too high, the thermal conductivity of the obtained foam material will be too high; and if the cracking temperature is too low, the cracking will be insufficient. Compared with the prior art, the present application has the following beneficial effects:
The SiBCN foam material and the SiHfBCN foam material prepared by the present application have the advantages of a light weight, a high strength, oxidation resistance and a low thermal conductivity. SiBCN and SiHfBCN have good compatibility with carbon, and the resulting SiBCN/C composite foam material or SiHfBCN/C composite foam material has the advantages of a light weight, a high strength, high temperature resistance, a low thermal conductivity and oxidation resistance.

### BRIEF DESCRIPTION OF THE DRAWINGS

Figure 1 is a flow chart of the preparation process of a SiBCN foam material or a SiHfBCN foam material.
Figure 2 is a flow chart of the preparation process of a SiBCN/C composite foam material or a SiHfBCN/C composite foam material.

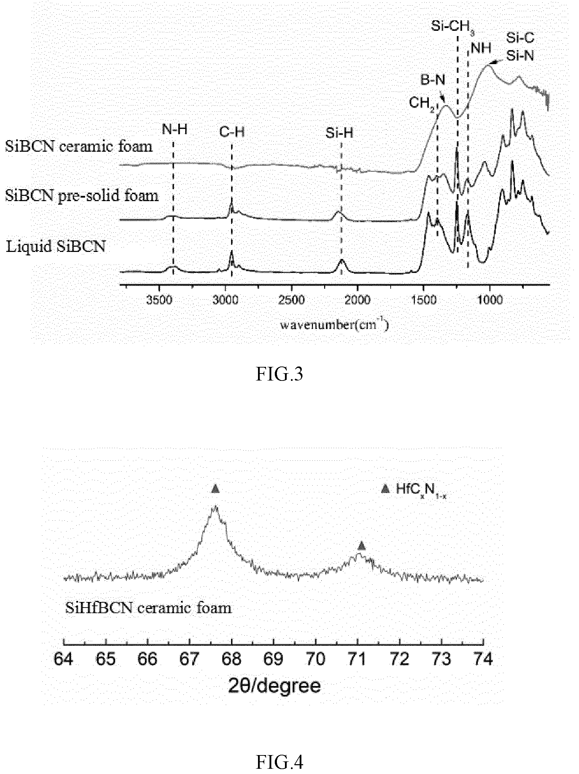

Figure 3 is an infrared spectrum of the SiBCN ceramic foam material sample prepared in Example 1 of the present application.
Figure 4 is a XRD pattern of the SiHfBCN ceramic foam material sample prepared in Example 2 of the present application.
Figure 5 is a microscopic topography diagram of the SiBCN foam material sample prepared in Example 1 of the present application.
Figure 6 is a microscopic topography diagram of the SiBCN foam material sample prepared in Example 5 of the present application.
Figure 7 is a microscopic topography diagram of the SiBCN foam material sample prepared in Example 6 of the present application.

### DETAILED DESCRIPTION OF THE EMBODIMENTS

The high-temperature-resistant, oxidation-resistant, light-weight heat-insulation foam material and its preparation method of the present application will be described below with reference to the accompanying drawings and examples. It should be understood that these examples are only used to illustrate the present application and not to limit the scope of the present application. It should be understood that, after reading the content of the present application, those skilled in the art application make various changes and modifications to the present application, and these equivalent forms also fall within the scope defined by the appended claims of the present application.

The SiBCN precursorused in the following examples is polyborosilazane (the number-average molecular weight of polyborosilazane is 400~600g/mol, and the viscosity at 80°C is 100~300 cp) , purchased from the Institute of Chemistry, Chinese Academy of Sciences, or Shandong Zibo Industry and Trade Co., Ltd. The SiHfBCN precursor (the number-average molecular weight of hafnium-containing polyborosilazane is 500~1000g/mol, and the room temperature viscosity is 100~500cp) was made in the laboratory (the specific preparation method is described below), wherein the polysilazane HTT1800 is a polysilazane containing vinyl active groups (its molecular structure is described below), purchased from Guangzhou Honghai Chemical Technology Co., Ltd., and the rest of the raw materials can be purchased from the market.

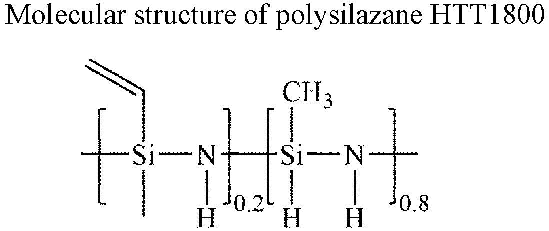

Preparation of SiHfBCN precursor: at room temperature, toluene was preadded in a Schlenk reactor filled with inert gas atmosphere, and polysilazane HTT1800 was dissolved in toluene to prepare a solution with volume fraction of 40%; then, the toluene solution of Hf(NEt₂)₄ with volume fraction of 6% was added dropwise to the Schlenk reactor(wherein the volume ratio of Hf(NEt₂)₄ to polysilazane HTT1800 is 1:9), and stirred for 2h after mixing; the reaction system was cooled to -50°C, and the toluene solution of borane dimethyl sulfide BH₃·(CH₃)₂S with volume fraction of 6% was added dropwise to the mixture solution (wherein the volume ratio of BH₃·(CH3)₂S to polysilazane HTT1800 is 1:18), and stirred for 2 hours; then the reaction system was heated to room temperature for 24 hours; finally, the SiHfBCN precursor can be obtained by evaporating the toluene at 50-60°Cunder vacuum.

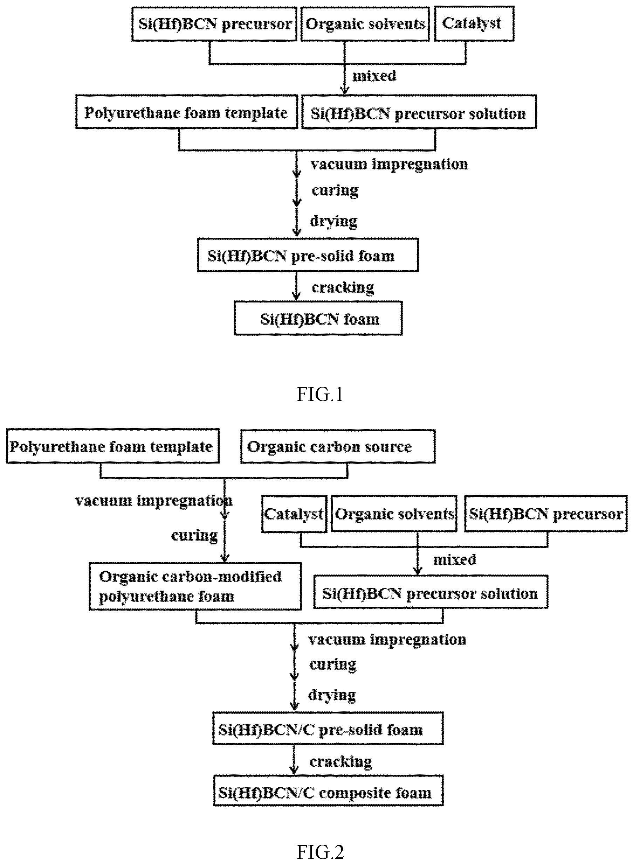

The specific embodiment of the present application provides a high-temperature-resistant and oxidation-resistant light-weight heat-insulation foam material, wherein the preparation method of a SiBCN foam material or a SiHfBCN foam material, as shown in Figure 1, includes the following steps:
S1. Preparation of precursor solution: Dissolve a SiBCN precursor in an organic solvent to prepare a 5wt%~80wt% SiBCN precursor solution, add 0.5%~5% catalyst bymass of the SiBCN precursor thereto, and stir for a period of time until mix uniformly; or, dissolve a SiHfBCN precursor in an organic solvent to prepare a 5wt%~80wt% SiHfBCN precursor solution, adding 0.5%~5% catalyst by mass of the SiHfBCN precursor thereto, and stir for a period of time until the mixture is uniform.
S2. Impregnation process: Impregnate a polyurethane foam template with an average pore size of 1µm~1mm in the SiBCN precursor solution or the SiHfBCN precursor solution, wherein a vacuum degree for impregnation is 10Pa~10⁵Pa, and an impregnation time is 0.1~2h.
S3. Curing process: Under non-oxygen and sealing conditions, a temperature is raised from room temperature to 100~280°C at a heating rate of 0.01~5°C/min, and then maintain the temperature for 2~8 hours to cure.
S4. Drying process: Under an inert environment of nitrogen or argon, raise a temperature from room temperature to 100~280°C at a heating rate of 0.01~1°C /min, then maintain the temperature for 4~24 hours to dry and remove the organic solvent, so as to obtain a SiBCN pre-solid foam or a SiHfBCN pre-solid foam.
S5. Cracking process: Increase the temperature of the SiBCN pre-solid foam or the SiHfBCN pre-solid foam from room temperature to 800~1500°C at a rate of 0.1~5°C /min under an inert environment of nitrogen or argon, and then maintain the temperature for 2~8 hours to obtain the SiBCN foam material or the SiHfBCN foam material.

Another specific embodiment of the present application provides a high - temperature-resistant and oxidation-resistant light-weight heat-insulation foam material, wherein the preparation method of a SiBCN/C composite foam material or a SiHfBCN/C composite foam material, as shown in Figure 2,includes the following steps:
S1. Preparation method of organic carbon-modified polyurethane foam template: A polyurethane foam with an average pore size of 1µm~1mm is impregnated in an organic carbon source, wherein an impregnation vacuum degree is 10 Pa~10⁵ Pa, and an impregnation time is 0.1~2h. Then increase a temperature from room temperature to 50~200°C at a heating rate of 0.01~10°C /min, and keep the temperature for 2~96 hours to cross-link and solidify the organic carbon source, so as to obtain an organic carbon-modified polyurethane foam.
S2. Precursor solution preparation: Dissolve a SiBCN precursor in an organic solvent to make a 5wt%~80wt% SiBCN precursor solution, then add 0.5%~5% catalyst by mass of the SiBCN precursor thereto and stir for a period of time until it is uniformly mixed; or, dissolve a SiHfBCN precursor in an organic solvent to prepare a 5wt%~80wt% SiHfBCN precursor solution, then add 0.5%~5% catalyst by mass of the SiHfBCN precursor thereto, and stir for a period of time until it is uniformly mixed.
S3. Impregnation process: Impregnate the organic carbon-modified polyurethane foam template in the SiBCN precursor solution or the SiHfBCN precursor solution, wherein, a vacuum degree of impregnation is 10Pa~10⁵Pa, and an impregnation time is 0.1~2h.
S4. Curing process: Under non-oxygen and sealing conditions, raise a temperature from room temperature to 100~280°C at a heating rate of 0.01~5°C/min, and then maintain the temperature for 2~8 hours to cure.
S5. Drying process: Under an inert environment of nitrogen or argon, raise a temperature from room temperature to 100-280 °C at a heating rate of 0.01~1°C /min, and then keep the temperature for 4~24h to dry and remove the organic solvent, so as to obtain a SiBCN/C pre-solid foam or a SiHfBCN/C pre-solid foam.
S6. Cracking process: Increase a temperature of the above-mentioned SiBCN pre-solid foam or SiHfBCN pre-solid foam from room temperature to 800~1500 °C at a heating rate of 0.1~5°C /min under an inert environment of nitrogen or argon, and then maintain the temperature for 2~8 hours to obtain the SiBCN/C composite foam or the SiHfBCN/C composite foam.

### Example 1

A SiBCN foam material, whose preparation method comprises the following steps:
S1. Precursor solution preparation: Dissolve a SiBCN precursor in n-nonane to prepare a 10wt% SiBCN precursor solution, add 0.5% dicumyl peroxide as catalyst by mass of the SiBCN precursor, and stir for 10 minutes under the condition of sealing until the mixture is uniform;
S2. Impregnation process: impregnate a polyurethane foam template with a size of 200mm×200mm×35mm, an average pore diameter of 300µm, a density of 0.032g/cm³, and a porosity of 92.6% in the above-mentioned precursor solution at normal pressure, and an impregnation time is 10 minutes;
S3. Curing process: Under non-oxygen and sealing conditions, raise a temperature from room temperature to 160 °C at a heating rate of 0.5 °C/min, and then keep the temperature to cure for 4 hours;
S4.Drying process: Increase a temperature from room temperature to 150 °C at a heating rate of 0.5 °C/min, and then keep the temperature for 24 hours to dry and remove the n-nonane, so as to obtain a SiBCN pre-solid foam;
S5.Cracking process: Increase a temperature of the SiBCN pre-solid foam from room temperature to 900°Cat a heating rate of 0.5°C/min under inert environment of argon, and then keep the temperature for 8 hours to obtain the SiBCN foam material.

The SiBCN foam material performance test are as follows: The density test is carried out in accordance with GB/T 17911-2006 (Refractory products-method of test for ceramic fibre products);the room temperature compressive strength test is carried out according to GB/T 1453-2005 (Test method for flatwise compression properties of sandwich constructions or cores); the thermal conductivity test is carried out in accordance with GB/T 10295-2008 (Thermal insulation - Determination of steady-state thermal resistance and related properties-Heat flow meter apparatus).

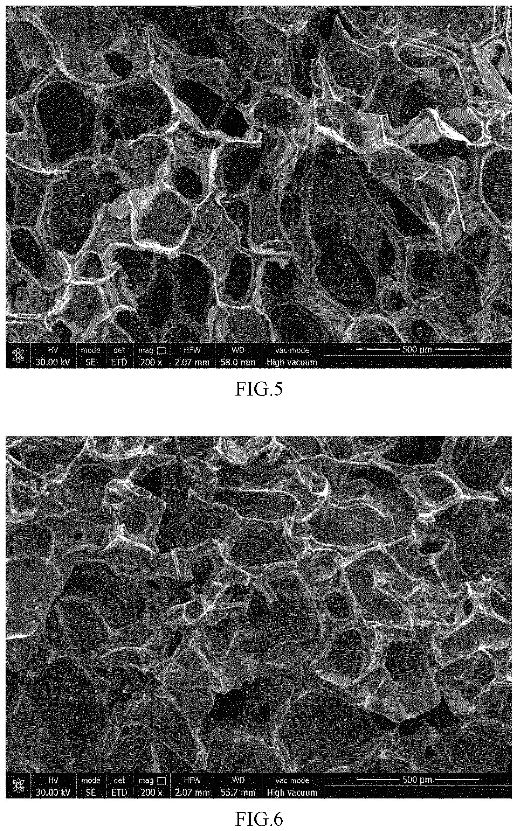

The microscopic morphology of the prepared SiBCN foam material sample is shown in Figure 5. The density of the material is 0.17g/cm³, the compressive strength is 0.8MPa at room temperature, and the thermal conductivity is 0.06W/(m▪K) at room temperature. After the material was heat-treated in air at 1500°C for 20min, the weight loss rate was 1.01%, and the linear shrinkage rate was 0.67%.

### Example 2

A SiHfBCN foam material, whose preparation method comprises the following steps:
S1. Preparation of precursor solution: Dissolve a SiHfBCN precursor in n-tridecane to prepare a 10wt% SiHfBCN precursor solution, add 0.5% dicumyl peroxide as catalyst by mass of the SiHfBCN precursor, and stir for 10 minutes under the condition of sealing until the mixture is uniform;
S2. Impregnation process: Impregnate a polyurethane foam template with a size of 200mm×200mm×35mm, an average pore diameter of 400µm, a density of 0.026g/cm³, and a porosity of 94.2% in the above-mentioned precursor solution at normal pressure. a vacuum degree of impregnation is 10³ Pa, and an impregnation time is 30 minutes;.
S3. Curing process: Under non-oxygen and sealing conditions, raise a temperature from room temperature to 230°C at a heating rate of 1°C/min, and then keep the temperature for 2 hours to cure;
S4. Drying process: Increase a temperature from room temperature to 230°C at a heating rate of 1 °C /min, and then keep the temperature for 8 hours to dry and remove the n-tridecane, so as to obtain a SiHfBCN pre-solid foam;
S5.Cracking process: Increase a temperature of the SiHfBCN pre-solid foam from room temperature to 1200°C at a heating rate of 1°C/min under an inert environment of argon, and then keep the temperature for 4 hours to obtain the SiHfBCN foam material.

The microscopic morphology of the prepared SiHfBCN foam material sample is not much different from that in Figure 5. The density of the material is 0.21g/cm³, the compressive strength is 1.1MPa at room temperature, and the thermal conductivity is 0.067W/(m▪K) at room temperature. After the material was heat-treated in air at 1600°C for 1000s, the weight loss rate was 1.69%, and the linear shrinkage rate was 1.36%.

### Example 3

A SiBCN/C composite foam material, whose preparation method comprises the following steps:
S1. Preparation of organic carbon-modified polyurethane foam template: Mix furfuryl alcohol and formic acid to form an organic carbon source solution with a formic acid concentration of 50g/L and stir evenly; Immerse a polyurethane foam template with a size of 200mm×200mm×35mm, an average pore diameter of 400µm, a density of 0.026 g/cm³ and a porosity of 94.2% in the above organic carbon source solution at atmospheric pressure (normal pressure), and an immersing time was 60 min; Then, under an inert gas environment of argon, raise a temperature from room temperature to 100°C at a heating rate of 1°C/min, and then keep the temperature for 1 h to cross-link and solidify the organic carbon source, so as to obtain an organic carbon-modified polyurethane foam;
S2. Preparation of precursor solution: Dissolve a SiBCN precursor in n-octaneto prepare a 10 wt% SiBCN precursor solution, add 0.5 % dicumyl peroxide as catalyst by mass of the SiBCN precursor, and stir for 10 minutes under the condition of sealing until the mixture is uniform;
S3. Impregnation process: Impregnate the organic carbon-modified polyurethane foam in the SiBCN precursor solution for 50minwith the vacuum degree of 10Pa;
S4. Curing process: under non-oxygen and sealing conditions, raise a temperature from room temperature to 120°C at a heating rate of 5 °C/min, and then keep the temperaturefor 8 hours to cure ;
S5. Drying process: Under an inert environment of argon, raise a temperature from room temperature to 120°C at a heating rate of 0.2 °C/min, and keep the temperature for 24 hours, then dried, and remove the solvent n-octane to obtain a SiBCN/C pre-solid foam;
S6.Cracking process: Raise a temperature of the SiBCN/C pre-solid foam from room temperature to 1500°C at a heating rate of 0.5°C/min under an inert environment of argon, and then keep the temperature for 2 hours to obtain the SiBCN/Ccomposite foam material.

The microscopic morphology of the prepared SiBCN/Ccomposite foam material sample is not much different from that in Figure 5. The density of the material is 0.23g/cm³, the compressive strength is 1.0MPa at room temperature, and the thermal conductivity is 0.067W/(m▪K) at room temperature. After the material was heat-treated in air at 1500°C for 20min, the weight loss rate was 1.32%, and the linear shrinkage rate was 0.96%.

### Example 4

A SiHfBCN/C composite foam material, whose preparation method comprises the following steps:
S1. Preparation of organic carbon-modified polyurethane foam template: Mix furfuryl alcohol and formic acid to form an organic carbon source solution with a formic acid concentration of 50 g/L and stir evenly; Immerse a polyurethane foam template with a size of 200mm×200mm×35mm, an average pore diameter of 400µm, a density of 0.026 g/cm³ and a porosity of 94.2% in the above organic carbon source solution at atmospheric pressure, and an immersing time was 60min; Then, under an inert gas environment of argon, raise a temperature from room temperature to 80°C at a heating rate of 0.5 °C/min, and then keep the temperature for 2 hours to cross-link and solidify the organic carbon source, so as to obtain an organic carbon-modified polyurethane foam;
S2. Preparation of precursor solution: Dissolve a SiHfBCN precursor in n-nonaneto prepare a 10wt% SiHfBCN precursor solution, add 0.5% dicumyl peroxide as catalyst by mass of the SiHfBCN precursor, and stir for 10 minutes under the condition of sealing until the mixture is uniform;
S3. Impregnation process: Under normal pressure conditions, impregnate the organic carbon-modified polyurethane foam in the SiHfBCN precursor solution for 20min;
S4. Curing process: Under non-oxygen and sealing conditions, raise a temperature from room temperature to 120°C at a heating rate of 5 °C /min, and then keep the temperature for 4 hours to cure;
S5. Drying process: In an inert environment of argon, raise a temperature from room temperature to 120°C at a heating rate of 0.2 °C /min, and keep the temperature for 24hours, then dried, and remove the solvent n-nonane to obtain a SiHfBCN/C pre-solid foam.
S6.Cracking process: Increase a temperature of the SiHfBCN/C pre-solid foam from room temperature to 1500°C at a heating rate of 3°C/min under an inert environment of argon, and then keep the temperature for 2 hours to obtain the SiHfBCN/C composite foam material.

The microscopic morphology of the prepared SiHfBCN/C composite foam material sample is not much different from that in Figure 5. The density of the material is 0.26g/cm³, the compressive strength is 1.5MPa at room temperature, and the thermal conductivity is 0.074W/(m▪K) at room temperature. After the material was heat-treated in air at 1600°C for 1000s, the weight loss rate was 2.08%, and the linear shrinkage rate was 1.63%.

### Example 5

Example 5 is the same as Example 1,except that the preparation of the precursor solution in S1 is different.

S1.Preparation of the precursor solution in Example 5: Dissolve a SiBCN precursor in n-nonane to prepare a 20wt% SiBCN precursor solution, add 2.5% dicumyl peroxide as catalyst by mass of the SiBCN precursor, and stir for 20 minutes under the condition of sealing until the mixture is uniform.

The microscopic morphology of the prepared SiBCN foam material sample is shown in Figure 6. The density of the material is 0.32g/cm³, the compressive strength is 3.83MPa at room temperature, and the thermal conductivity is 0.08W/(m▪K) at room temperature. After the material was heat-treated in air at 1500°C for 20min, the weight loss rate was 0.95%, and the linear shrinkage rate was 0.68%.

### Example 6

Example 6 is the same as Example 1, except that the preparation of the precursor solution in S1 is different.

S1.The preparation of the precursor solution in Example 6: Dissolve a SiBCN precursor in n-nonaneto prepare a 30wt% SiBCN precursor solution, add 5% dicumyl peroxide as catalyst by mass of the SiBCN precursor, and stir for 30 minutes under the condition of sealing until the mixture is uniform.

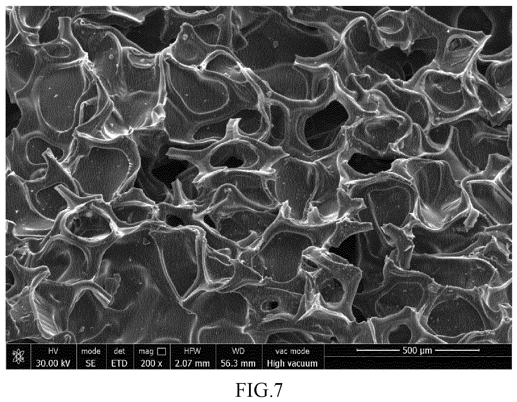

The microscopic morphology of the prepared SiBCN foam material sample is shown in Figure 7. The density of the material is 0.6g/cm³, the compressive strength is 7.2MPa at room temperature, and the thermal conductivity is 0.18W/(m▪K) at room temperature. After the material was heat-treated in air at 1500°C for 20min, the weight loss rate was 0.84%, and the linear shrinkage rate was 0.59%.

### Example 7

Example 7 is the same as Example 2, except that the preparation of the precursor solution in S1 is different.

S1. The preparation of the precursor solution in Example 7: Dissolve a SiHfBCN precursor in n-tridecane to prepare a 20wt% SiHfBCN precursor solution, then add 2.5% dicumyl peroxide as catalyst by mass of the SiHfBCN precursor, and stir for 20 minutes under the condition of sealing until the mixture is uniform.

The microscopic morphology of the prepared SiHfBCN foam material sample is not much different from that in Figure 6. The density of the material is 0.36g/cm³, the compressive strength is 4.09MPa at room temperature, and the thermal conductivity is 0.1W/(m▪K) at room temperature . After the material was heat-treated in air at 1600°C for 1000s, the weight loss rate was 1.53%, and the linear shrinkage rate was 1.19%.

### Example 8

Example 8 is the same as Example 2, except that the preparation of the precursor solution in S1 is different.

S1. The preparation of the precursor solution in Example 8: Dissolve a SiHfBCN precursor in n-tridecane to prepare a 30 wt% SiHfBCN precursor solution, then add 5% dicumyl peroxide as catalyst by mass of the SiHfBCN precursor, and stir for 30 minutes under the condition of sealing until the mixture is uniform.

The microscopic morphology of the prepared SiHfBCN foam material sample is not much different from that in Figure 7. The density of the material is 0.78g/cm³, the compressive strength is 7.6MPa at room temperature, and the thermal conductivity is 0.22W/(m▪K) at room temperature. After the material was heat-treated in air at 1600°C for 1000s, the weight loss rate was 1.07%, and the linear shrinkage rate was 0.85%.

### Example 9

Example 9 is the same as Example 3, except that the preparation of the precursor solution in S2 is different.

S2. The preparation of the precursor solution in Example 9: Dissolve a SiBCN precursor in n-octane to prepare a 20wt% SiBCN precursor solution, add 2.5% dicumyl peroxide as catalyst by mass of the SiBCN precursor, and stir for 20 minutes under the condition of sealing until the mixture is uniform.

The microscopic morphology of the prepared SiBCN/C composite foam material sample is not much different from that in Figure 6. The density of the material is 0.37g/cm³, the compressive strength is 3.91MPa at room temperature, and the thermal conductivity is 0.09W/(m▪K) at room temperature. After the material was heat-treated in air at 1500°C for 20min, the weight loss rate was 1.21%, and the linear shrinkage rate was 0.92%.

### Example 10

Example 10 is the same as Example 3, except that the preparation of the precursor solution in S2 is different.

S2. The preparation of the precursor solution in Example 10: Dissolve a SiBCN precursor in n-octane to prepare a 30wt% SiBCN precursor solution, add 5% dicumyl peroxide as catalyst by mass of the SiBCN precursor, and stir for 30 minutes under the condition of sealing until the mixture is uniform.

The microscopic morphology of the prepared SiBCN/C composite foam material sample is not much different from that in Figure 7. The density of the material is 0.68g/cm³, the compressive strength is 7.4MPa at room temperature, and the thermal conductivity is 0.19W/(m▪K) at room temperature. After the material was heat-treated in air at 1500°C for 20min, the weight loss rate was 1.08%, and the linear shrinkage rate was 0.77%.

### Example 11

Example 11 is the same as Example 4, except that the preparation of the precursor solution in S2 is different.

S2. The preparation of the precursor solution in Example 11: Dissolve a SiHfBCN precursor in n-nonane to prepare a 20wt% SiHfBCN precursor solution, add 2.5% dicumyl peroxide as catalyst by mass of the SiHfBCN precursor, and stir for 20 minutes under the condition of sealing until the mixture is uniform.

The microscopic morphology of the prepared SiHfBCN composite foam material sample is not much different from that in Figure 6. The density of the material is 0.41g/cm³, the compressive strength is 4.15MPa at room temperature, and the thermal conductivity is 0.12W/(m▪K) at room temperature. After the material was heat-treated in air at 1600°C for 1000s, the weight loss rate was 1.87%, and the linear shrinkage rate was 1.46%.

### Example 12

Example 12 is the same as Example 4, except that the preparation of the precursor solution in S2 is different.

S2. The preparation of the precursor solution in Example 12: Dissolve a SiHfBCN precursor in n-nonane to prepare a 30wt% SiHfBCN precursor solution, add 5% dicumyl peroxide as catalyst by mass of the SiHfBCN precursor, and stir for 30 minutes under the condition of sealing until the mixture is uniform.

The microscopic morphology of the prepared SiHfBCN composite foam material sample is not much different from that in Figure 7. The density of the material is 0.82g/cm³, the compressive strength is 8.63MPa at room temperature, and the thermal conductivity is 0.25W/(m▪K) at room temperature. After the material was heat-treated in air at 1600°C for 1000s, the weight loss rate was 1.59%, and the linear shrinkage rate was 1.37%.

The above descriptions are only the preferred embodiments of the present application and are not intended to limit the present application. Any modification, equivalent replacement, improvement and the like made within the spirit and principles of the present application shall fall within the scope of protection of the pending claims of the present application.

## Claims

1. A high-temperature-resistant and oxidation-resistant light-weight heat-insulation foam material, being one selected from the group consisting of a SiBCN foam material, a SiHfBCN foam material, a SiBCN/C composite foam material and a SiHfBCN/C composite foam material, and prepared from a precursor solution through the processes of template impregnation, curing, drying and cracking;
wherein, the precursor solution is a SiBCN precursor solution or a SiHfBCN precursor solution, the template is a polyurethane foam or an organic carbon-modified polyurethane foam, a SiBCN precursor for preparing the SiBCN precursor solution is polyborosilazane, a SiHfBCN precursor for preparing the SiHfBCN precursor solution is hafnium-containing polyborosilazane.

2. The high-temperature-resistant and oxidation-resistant light-weight heat-insulation foam material according to claim 1, wherein
the SiBCN foam material has a density of equal to and greater than 0.07 g/cm³, a room temperature compressive strength of equal to and greater than 0.3 MPa, and a room temperature thermal conductivity of equal to and greater than 0.046 W/(m▪K);
the SiHfBCN foam material has a density of equal to and greater than 0.11 g/cm³, a room temperature compressive strength of equal to and greater than 0.45 MPa, and a room temperature thermal conductivity of equal to and greater than 0.053 W/(m▪K);
the SiBCN/C composite foam material has a density of equal to and greater than 0.09 g/cm³, a room temperature compressive strength of equal to and greater than 0.38 MPa, and a room temperature thermal conductivity of equal to and greater than 0.052 W/(m▪K); and
the SiHfBCN/C composite foam material has a density of equal to and greater than 0.13 g/cm³, a room temperature compressive strength of equal to and greater than 0.68 MPa, and a room temperature thermal conductivity of equal to and greater than 0.062 W/(m▪K);
preferably, the SiBCN foam material has a density of 0.17~0.6 g/cm³, a room temperature compressive strength of 0.8~7.2 MPa, and a room temperature thermal conductivity of 0.06~0.18 W/(m▪K);
the SiHfBCN foam material has a density of 0.21~0.78 g/cm³, a room temperature compressive strength of 1.1~7.6 MPa, and a room temperature thermal conductivity of 0.067~0.22 W/(m▪K);
the SiBCN/C composite foam material has a density of 0.23~0.68 g/cm³, a room temperature compressive strength of 1.0~7.4 MPa, and a room temperature thermal conductivity of 0.067~0.19 W/(m▪K);and
the SiHfBCN/C composite foam has a density of 0.26~0.82 g/cm³, a room temperature compressive strength of 1.5~8.63 MPa, and a room temperature thermal conductivity of 0.074~0.25 W/(m▪K).

3. A preparation method of the high-temperature-resistant and oxidation-resistant light-weight heat-insulation foam material, comprising the following steps of:
adopting a polyurethane foam or an organic carbon-modified polyurethane foam as a template and a SiBCN precursor solution or a SiHfBCN precursor solution as an impregnation solution, and sequentially carrying out impregnation process, curing process, drying process and cracking process to obtain the foam material;
wherein, the SiBCN precursor solution or the SiHfBCN precursor solution is obtained by dissolving a SiBCN precursor or a SiHfBCN precursor in an organic solvent, adding a catalyst and mixing uniformly; the SiBCN precursor is polyborosilazane and the SiHfBCN precursor is hafnium-containing polyborosilazane.

4. The preparation method according to claim 3, wherein a mass fraction of the SiBCN precursor in the SiBCN precursor solution or a mass fraction of the SiHfBCN precursor in the SiHfBCN precursor solution is 5%~80%, and a mass of the catalyst is 0.5%~5% of a mass of the SiBCN precursor or the SiHfBCN precursor;
preferably, the mass fraction of the SiBCN precursor in the SiBCN precursor solution or the mass fraction of the SiHfBCN precursor in the SiHfBCN precursor solution is 10%~30%.

5. The preparation method according to claim 3 or 4, wherein the organic solvent is liquid alkane;
preferably, the organic solvent is selected from at least one of the group consisting of hexane, heptane, octane, nonane, decane, undecane, dodecane, tridecane and their isomers; more preferably, the organic solvent is selected from at least one of the group consisting of n-hexane, n-octane and n-nonane.
preferably, the catalyst is selected from at least one of the group consisting of diisopropylbenzene peroxide, dibenzoyl peroxide, azo diisobutyronitrile, azo diisoprenonitrile and divinylbenzene; preferably, the catalyst is selected from at least one of the group consisting of diisopropylbenzene peroxide and divinylbenzene.

6. The preparation method according to any one of claims 3 to 5, wherein the organic carbon-modified polyurethane foam is prepared by immersing the polyurethane foam in an organic carbon source and then curing the organic carbon source attached to the polyurethane foam; preferably, the organic carbon source is selected from one of the group consisting of furfuryl alcohol, phenolic resin and resorcinol-formaldehyde sol; more preferably, in a process for preparing the organic carbon-modified polyurethane foam, the curing is to raise a temperature from room temperature to 50~200 °C at a heating rate of 0.01~10 °C/min in an inert gas environment of nitrogen or argon, and then keep the temperature for 2-96 hours to cross-link and solidify the organic carbon source, so as to obtain the organic carbon-modified polyurethane foam.

7. The preparation method according to claim 6, wherein,
when the organic carbon source is furfuryl alcohol, the process for preparing the organic carbon-modified polyurethane foam further includes adding formic acid or methyl p-toluenesulfonate as a catalyst into the furfuryl alcohol;
preferably, when the catalyst is formic acid, a ratio of a mass of formic acid to a volume of furfuryl alcohol, is 40~65 g/L; preferably, when the catalyst is methyl p-toluenesulfonate, a mass ratio of the methyl p-toluenesulfonate to the furfuryl alcohol is (0.004~0.08): 1;
when the organic carbon source is a phenolic resin, the process for preparing the organic carbon-modified polyurethane foam further includes adding hexamethylenetetramine as a catalyst and anhydrous ethanol as a solvent into the phenolic resin; preferably, a mass ratio of the hexamethylenetetramine to the phenolic resin is 1:(4~9); preferably, a ratio of a mass of phenolic resin to a volume of anhydrous ethanol is 0.1~0.2 g/mL;
when the organic carbon source is resorcinol-formaldehyde sol, the process for preparing the organic carbon-modified polyurethane foam further includes adding at least one selected fromthe group consisting of sodium carbonate, sodium hydroxide, and barium hydroxide as a catalyst and deionized water as a solvent into the resorcinol-formaldehyde sol; preferably, the molar ratio of the resorcinol to the formaldehyde is 1:2; preferably, the molar ratio of the resorcinol to the catalyst is (50 ~1000):1; and the molar ratio of the resorcinol to the deionized water is (0.01~0.5):1.

8. The preparation method according to claim 6 or 7, wherein, in the process for preparing the organic carbon-modified polyurethane foam, the used polyurethane foam has a reticulated open-cell structure with an average pore diameter of 1µm~1mm; preferably, the polyurethane foam has a density of 0.025 ~0.1 g/cm³ and a porosity of more than 92%; preferably, in the process for preparing the organic carbon-modified polyurethane foam, a vacuum degree of the immersing is 10 Pa~10⁵ Pa, and an immersing time is 0.1 ~2 h.

9. The preparation method according to any one of claims 3 to 5, wherein, the polyurethane foam used directly as the template has a reticulated open-cell structure with an average pore size of 1µm~1mm; preferably, the polyurethane foam has a density of 0.025~0.1 g/cm³ and a porosity of more than 92%.

10. The preparation method according to any one of claims 3 to 9, wherein, in the impregnation process, a vacuum degree is 10 Pa~10⁵ Pa and an impregnation time is 0.1~2 h; preferably, the curing process is to raise a temperature from room temperature to 100~280 °C at a heating rate of 0.01~5 °C/min under a non-oxygen sealing condition, and to keep the temperature for 2~8 hours; preferably, the drying process is to raise a temperature from room temperature to 100~280°C at a heating rate of 0.01~1 °C/min in an inert atmosphere of nitrogen or argon , and then keep the temperature for 4~24 hours; preferably, the cracking process is to raise a temperature from room temperature to 800~1500 °C at a heating rate of 0.1~5 °C/min in an inert atmosphere of nitrogen or argon, and then keep the temperature for 2~8 hours.
